# FASCICULE DE BREVET EUROPEEN

(11) **EP 3 263 979 B1**
(45) Date de publication et mention de la délivrance du brevet: **08.06.2022**
(21) Numéro de dépôt: 17177497.9
(22) Date de dépôt: 22.06.2017
(51) Int. Cl.: B60Q 1/068, F21S 41/29, F21S 41/55, F21S 41/63, B60Q 1/20, F21S 41/255, F21S 41/143, F21S 45/50

(54) **LENTILLE MONOBLOC A SECTEUR DE ROUE ENTRAINÉ**
EINTEILIGE LINSE MIT ANGETRIEBENEM RADSEKTOR
ONE-PIECE LENS WITH DRIVEN WHEEL SECTOR

(30) Priorité: 28.06.2016 FR 1656011
(43) Date de publication de la demande: 03.01.2018
(73) Titulaire: Valeo Vision Belgique, 7822 Meslin l'Evêque (BE)
(72) Inventeur: DINANT, Franck, 7822 Meslin L'Evêque (BE); SACCHET, Dirkie, 7822 Meslin L'Evêque (BE); DEBERT, Florestan, 7822 Meslin L'Evêque (BE)
(74) Mandataire: Valeo Visibility

(56) Documents cités:
- EP-A1- 3 021 042
- EP-A2- 1 234 716
- WO-A1-2015/115319
- FR-A1- 3 026 462

## Description

La présente invention concerne un dispositif lumineux de véhicule comprenant une pièce optique réglable. Plus particulièrement, elle concerne un dispositif lumineux de véhicule comprenant une lentille entrainée en mouvement par un élément mécanique.

Dans les dispositifs comprenant un élément optique, tel qu'une lentille, une solution utilisée pour régler cet élément est d'utiliser une vis de réglage, notamment une vis sans fin.

Un tel exemple de dispositif est divulgué dans WO2014012878, dans lequel des fourchettes nervurées coopèrent avec une vis de réglage. Celles-ci sont venues de matière en une seule pièce avec l'ensemble de la lentille. Un réglage précis et un agencement compact est obtenu. Cependant, le montage de la fourchette sur la vis de réglage est délicat à réaliser. EP 1 234 716 A2, FR 3 026 462 A2 et WO 2015/115319 A1 divulguent d'autres dispositifs d'éclairage connus de l'art antérieur.

Un objectif de l'invention est d'améliorer la robustesse entre le moyen d'entrainement et la lentille, tout en restant compact et précis.

Aussi un objet de la présente invention est un dispositif lumineux de véhicule comprenant :
- une lentille destinée à dévier les rayons lumineux émis par une source lumineuse, et comprenant un secteur de roue avec une surface entrainée, le secteur de roue étant venu de matière avec l'ensemble de la lentille,
- un moyen d'entrainement avec une surface d'entrainement agencée de manière à ce que la surface d'entrainement soit en contact avec la surface entrainée et à ce que le mouvement de la surface d'entrainement entraine un mouvement de la lentille. Selon l'invention,
- le secteur de roue est un secteur de roue dentée, les reliefs de la surface entrainée étant des dents ; il s'agit d'une forme simple et efficace pour optimiser la transmission de mouvement entre la surface d'entrainement et la surface entrainée ;
- le secteur de roue forme un bras s'étendant selon sa longueur entre une première extrémité reliée à la lentille et une deuxième extrémité libre, cette dernière portant la surface entrainée ; cela permet de minimiser l'encombrement du secteur de roue en augmentant également la démultiplication de mouvement, ce qui permet également de rendre plus précis le réglage au niveau du moyen d'entrainement.

Ainsi, l'utilisation d'un secteur de roue permet un positionnement du secteur de roue par rapport au moyen d'entrainement plus facile et plus robuste. Il permet également, de réaliser la lentille en une seule pièce permettant ainsi de gagner en compacité et en précision.

Le dispositif lumineux selon l'invention peut optionnellement présenter une ou plusieurs des caractéristiques suivantes :
- les dents s'engrènent avec des reliefs que comprend la surface d'entrainement ; cela permet d'optimiser la transmission de mouvement entre la surface d'entrainement et la surface entrainée ;
- le mouvement de la lentille est un mouvement de rotation autour d'un axe de rotation, le secteur de roue étant centré sur l'axe de rotation de la lentille ; cela permet une rotation avec des efforts moindres sur le moyen d'entrainement ;
- la lentille comprend une partie optique et deux parties d'articulation mobiles, la partie optique comprenant un dioptre avant et un dioptre arrière agencée pour dévier les rayons lumineux d'une source lumineuse du dispositif, les parties d'articulation mobile étant agencées de part et d'autre de la partie optique ; ainsi la lentille peut être montée avec un maintien ferme de la partie optique, tout en la laissant libre en rotation via ses parties d'articulation mobiles ;
- l'axe de rotation passe par chacune des articulations mobiles ;
- la lentille est formée en un matériau monobloc transparent ou translucide, notamment en polyméthacrylate de méthyle (PMMA) ; ces matériaux peuvent être fragiles à la déformation ; cependant la réalisation en secteur de roue est une forme assez résistante, ce qui permet de réaliser le secteur de roue avec le matériau de la lentille tout en conservant une bonne résistance du secteur de roue dans la durée ; en particulier, le PMMA est particulièrement intéressant pour sa transparence et ses propriétés optiques pour former la partie optique ; toutefois, le PMMA est plus sujet au fluage que d'autres matériaux plastiques, par exemple le polyoxyméthilène utilisé pour réaliser une vis de réglage ; la forme en secteur de roue, notamment dentée, est cependant particulièrement résistante au fluage ; la réalisation de la lentille en PMMA permet donc d'utiliser un matériau performant optiquement à la fois pour la partie optique et le secteur de roue, tout en résistant au fluage et donc avec une durée de vie améliorée ;
- le bras est globalement plat et comprend deux surfaces étendues séparées par une tranche, la tranche comprenant la surface entrainée au niveau de la deuxième extrémité ; c'est une forme plus simple à réaliser, notamment par moulage ;
- le secteur de roue comprend une portion de cylindre et des dents agencées sur la tranche de la portion de cylindre, formant ainsi la surface entrainée, notamment une portion de cylindre d'axe parallèle ou confondu avec l'axe de rotation de la lentille, notamment d'axe parallèle ou confondu avec l'axe de rotation de la lentille ;
- selon l'alinéa précédent, la surface entrainée peut porter une denture hélicoïdale ; dans ce cas la surface entrainée est circonscrite dans une portion de cylindre ; la denture hélicoïdale permet un engrènement efficace avec une autre denture hélicoïdale ou une vis de réglage ;
- le moyen d'entrainement est une vis de réglage comprenant une portion filetée avec un filetage formant la surface d'entrainement ; cela permet de régler simplement le faisceau lumineux avec une bonne démultiplication ;
- la vis de réglage s'étend selon un axe longitudinal et comprend une portion porteuse, cette portion porteuse étant située d'un côté de la portion filetée selon l'axe longitudinal, ledit dispositif comprenant en outre :
   o une paroi de coopération avec la vis de réglage,
   o un ou des moyens élastiques agencés entre ladite portion porteuse et ladite paroi de coopération et aptes à être comprimés selon une direction transversale à l'axe longitudinal de la vis de réglage,
      la lentille, la paroi de coopération et le ou les moyens élastiques étant agencés de manière à ce que le ou au moins l'un des moyens élastiques soit contraint de manière à exercer une force de rappel de la portion filetée vers la lentille ; ainsi, la portion filetée est en appui permanent contre la lentille, évitant ainsi tout jeu entre la portion filetée et la lentille ;
- le secteur de roue forme un bras, la force de rappel de la portion filetée vers la lentille étant alignée avec la direction selon laquelle s'étend ce bras; on renforce ainsi les rattrapages de jeux entre la surface entrainée et la surface d'entrainement ;
- la portion porteuse forme l'une des extrémités de la vis de réglage ; cela rend plus efficace le rappel vers la pièce réglable et simplifie sa réalisation, notamment par moulage ;
- les moyens élastiques sont des lamelles ; c'est une forme simple de réalisation de moyens élastiques ;
- le dispositif comprend un boitier à l'intérieur duquel sont logés la lentille et la vis de réglage ;
- le boitier comprend :
   ∘ un logement avant fermé à l'avant par une glace de fermeture, la lentille étant montée à l'intérieur de ce logement avant,
   ∘ une cassette à l'intérieur duquel est agencée la portion filetée,
   ∘ un manchon reliant le logement avant et la cassette, le secteur de roue formant un bras s'étendant selon sa longueur au travers du manchon jusque dans la cassette, où la surface entrainée est en contact avec la surface d'entrainement ;
      cela permet de monter la lentille en la faisant glisser vers la cassette, le manchon formant un moyen de guidage du secteur de roue vers la vis de réglage ;
- la cassette a une paroi intérieure formée par une portion de cylindre d'un diamètre donné, le manchon présentant selon une direction transversale une largeur interne inférieure à ce diamètre donné et supérieure à l'épaisseur du secteur de roue; on améliore ainsi le guidage de la surface entrainée vers la portion filetée ;
- le manchon débouche dans la cassette via une ouverture délimitée par un chanfrein orienté vers l'intérieur du manchon ; cela facilite l'engagement du secteur de roue dans le manchon ;
- le secteur de roue est un secteur de roue conique, notamment d'axe parallèle ou confondu avec l'axe de rotation de la lentille ;
- le moyen d'entrainement est une roue conique d'axe formant un angle avec l'axe du secteur de roue conique, notamment ces deux axes sont concourants, ils forment notamment entre eux un angle de 90°, la roue conique formant notamment un pignon ; cela permet de réaliser un renvoi d'angle directement sans vis de réglage ;
- le secteur de roue forme un bras présentant une élasticité selon une direction parallèle à l'axe de la roue conique, le bras et la roue conique étant agencés de manière à ce que le bras soit contraint de manière à exercer une force de rappel de la surface entrainée vers la surface d'entrainement ; cela permet
ainsi de rattraper les jeux éventuels entre la roue conique et la lentille ;
- le dispositif comprend également :
   o un ensemble de plaquage comprenant une armature et une portion de contact portée par l'armature, l'armature entourant au moins partiellement la lentille, cette portion de contact étant en appui contre la lentille,
   la lentille, le moyen d'entrainement et l'élément de plaquage étant agencés de manière à ce que la lentille soit au moins partiellement enserrée entre la vis de réglage et la portion de contact, et à ce que, selon une direction allant de la vis de réglage vers la portion de contact, dite direction de flexion, la portion de contact soit rigide et l'armature soit élastiquement déformable ; cela permet de réaliser un moyen d'absorption de l'effort lorsque la lentille vient en butée ;
- le secteur de roue forme un bras s'étendant selon sa longueur, cette longueur étant alignée avec ladite direction de flexion ; l'effort sur le moyen d'entrainement est ainsi directement retransmis à l'armature, favorisant ainsi la reprise d'effort davantage sur l'armature.
- l'armature est montée en précontrainte dans le boitier de manière à générer une force de rappel à l'opposé de la direction de flexion sur la vis de réglage ; on renforce ainsi le plaquage contre la vis de réglage ;
- le dispositif lumineux comprend un support de la lentille, ce support étant un dissipateur thermique, notamment un radiateur ; on améliore la compacité en permettant l'évacuation de la chaleur générée par la source lumineuse ;
- l'armature est en polycarbonate ; cela permet une bonne flexibilité de celle-ci ;
- le dispositif lumineux comprend la source lumineuse ; dans ce cas le dispositif lumineux est prêt à émettre un faisceau lumineux dès qu'il sera alimenté en électricité ;
- la source lumineuse est une diode électroluminescente, encore appelée LED; la présente invention est particulièrement utile dans le cadre d'un dispositif lumineux avec une diode électroluminescente ; en effet comme cette dernière est de taille très réduite comparée à des filaments de lampes classiques, les jeux et les imprécisions ont plus d'impact ;
- la lentille est en lien direct d'un côté contre l'élément de plaquage et/ou de l'autre côté contre le moyen d'entrainement ;
- la lentille est agencée de manière à dévier les rayons lumineux de manière à former un faisceau d'éclairage présentant une ligne de coupure ; la précision du dispositif selon l'invention est d'autant plus utile dans ce cas, car la ligne de coupure doit être positionnée précisément pour ne pas éblouir les conducteurs des véhicules venant en sens inverse ou suivis par un véhicule équipé d'un dispositif lumineux selon l'invention ;
- le dispositif lumineux est un feu antibrouillard, la lentille étant notamment agencée de manière à dévier les rayons lumineux de manière à former un faisceau antibrouillard présentant une ligne de coupure horizontale.

Un autre objet de l'invention est un véhicule comprenant un dispositif lumineux selon l'invention.

Sauf indication contraire, lorsqu'ils sont employés pour l'agencement du dispositif lumineux, les termes « avant », « arrière », « inférieur », « supérieur », « côté », « longitudinal », « transversal » se réfèrent au sens d'émission de lumière hors du dispositif lumineux.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue en perspective qui représente de façon éclatée un dispositif lumineux selon un premier mode de réalisation de l'invention ;
- la figure 2 est une vue de face du dispositif lumineux de la figure 1, illustré de façon assemblé ;
- la figure 3 est une coupe transversale du dispositif lumineux de la figure 2, selon un plan perpendiculaire à la vue de la figure 2 et passant par l'axe 3 ;
- la figure 4 est une vue en perspective et de dessous d'une vis de réglage selon une réalisation de l'invention, notamment la vis de réglage du dispositif de la figure 1 ;
- la figure 5 est une vue de côté de la vis de réglage de la figure 4 ;
- la figure 6 est une section de la vis de réglage perpendiculairement à son axe longitudinal et au niveau des moyens élastiques ;
- la figure 7 est une vue en perspective de l'élément de plaquage du dispositif lumineux des figures précédentes ;
- la figure 8 est une vue de côté dispositif lumineux de la figure 2, sans la glace de fermeture, ni le boitier ;
- la figure 9 est une coupe vue en perspective du dispositif lumineux de la figure 2, selon un plan perpendiculaire à l'axe 3 et comprenant l'axe 63, mais sans la glace de fermeture ;
- la figure 10 est une vue de côté du dispositif lumineux de la figure 2, sans le boitier, ni la glace de fermeture, du côté opposé à celui de la figure 8 ;
- la figure 11 représente une vue en perspective d'une partie d'un dispositif lumineux selon un autre mode de réalisation ;
- la figure 12 représente une vue de dessus de la figure 11.

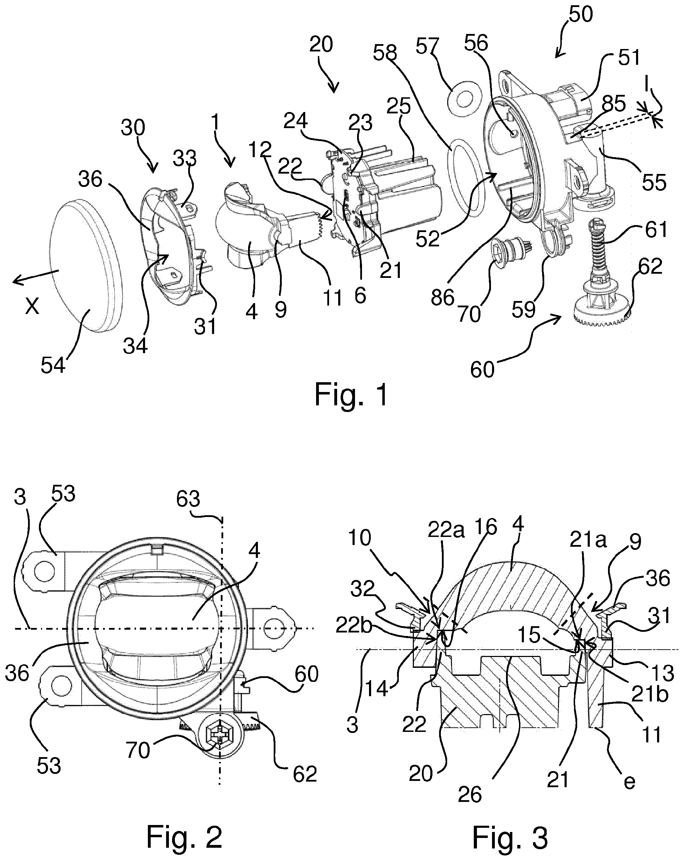

Les figures 1 et 2 illustrent un premier exemple de réalisation d'un dispositif lumineux de véhicule selon l'invention.

Ce dispositif lumineux comprend un boîtier 50 définissant un logement 52 à l'intérieur duquel sont disposés une source lumineuse 6 et une lentille 1 déviant les rayons émis par cette source lumineuse 6. De façon classique, le dispositif lumineux peut comprendre une glace de fermeture 54 et une pièce de style ou masque 30, situé entre la glace de fermeture 54 et la lentille 1, selon la direction d'émission X du faisceau lumineux par le dispositif lumineux.

Le boîtier 50 comprend une partie formant une enveloppe sensiblement cylindrique, définissant le logement 52. Le boitier peut comprendre des oreilles de fixation 53 destinées à être fixées au véhicule.

Le dispositif lumineux permet l'émission d'un faisceau lumineux tronqué ou à tout le moins présentant une décroissance très rapide de la luminosité émise en dessous d'un certain niveau, le bord de la partie tronquée ou cette décroissance très rapide correspondant à une ligne de coupure. Par exemple, le faisceau se trouve limité sous un plan, notamment destiné à être sensiblement horizontal et à se trouver à une certaine hauteur au dessus de la chaussée, une fois le dispositif monté dans le véhicule.

Dans l'exemple illustré, le dispositif est un projecteur générant un faisceau antibrouillard, présentant donc une ligne de coupure horizontale; ce projecteur est encore appelé feu antibrouillard avant ou projecteur antibrouillard.

Ce dispositif est configuré pour autoriser un réglage d'un positionnement de la ligne de coupure du faisceau, selon une direction donnée, notamment destinée à être verticale.

Dans l'exemple illustré la lentille 1 présente une partie optique, appelée ci-après partie de déviation 4 et délimitée par un dioptre arrière et un dioptre avant.

Les dioptres avant et arrière de la partie de déviation 4 sont agencés de manière à dévier les rayons lumineux pour former le faisceau lumineux avec la ligne de coupure. Selon un exemple de réalisation non illustré, on peut également avoir des dioptres avant et/ou arrière portant des stries agencées pour dévier les rayons lumineux de manière à former la ligne de coupure.

Le réglage de la position de la ligne de coupure est réalisé par variation du positionnement angulaire de la lentille 1 autour d'un axe de pivotement, dans cet exemple un axe de rotation 3, par l'actionnement, également dans cet exemple, d'une vis de réglage 60 avec une portion filetée 61.

Cet axe de rotation 3 est destiné à être orienté selon l'axe transversal du véhicule équipé du dispositif lumineux.

Dans cet exemple, pour permettre ce réglage, la lentille 1 comprend également deux parties d'articulation mobiles 9 et 10 de part et d'autre de la partie de déviation 4, autour desquelles elle peut tourner. Sur la figure 3, ces parties d'articulation mobiles 9 et 10 sont schématiquement séparées de la partie de déviation 4 par les lignes pointillées.

La lentille 1 comprend également une partie dentée 11 coopérant avec la vis de réglage 60, dont la rotation autour de l'axe longitudinal 63 de cette vis entraine le pivotement vers le haut ou vers le bas de la lentille 1. Autrement dit, la vis de réglage 60 forme un exemple de réalisation d'un moyen d'entrainement de la lentille 1.

Ainsi, le réglage de la ligne de coupure s'effectue par un actionnement d'un seul organe, à savoir la lentille 1, servant à la formation et à la transmission du faisceau.

Dans cet exemple, selon un principe de l'invention, la partie dentée forme un secteur de roue 11 avec une surface entrainée par la vis de réglage 60, ce secteur de roue 11 étant venu de matière en une seule pièce avec l'ensemble de la lentille, notamment avec la partie de déviation 4.

Selon l'invention, le secteur de roue est un secteur de roue dentée 11.

Dans cet exemple, les dents 12' du secteur de roue dentée 11 forment la surface entrainée 12. Le filetage 61' de la portion filetée 61 forme la surface d'entrainement, qui entraine cette surface entrainée, donc le secteur de roue dentée 11, et donc directement la lentille 1.

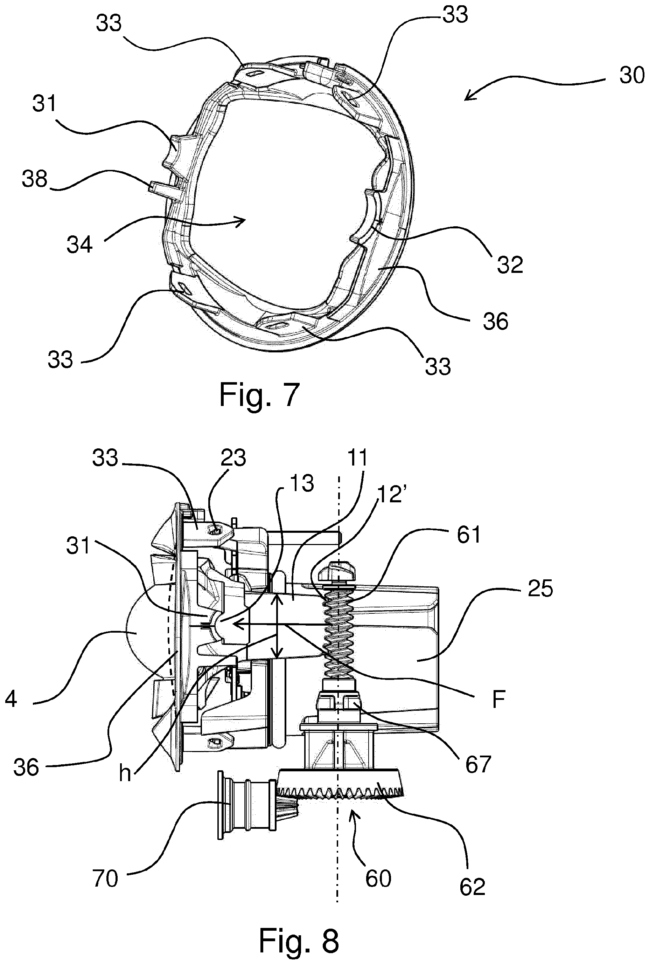

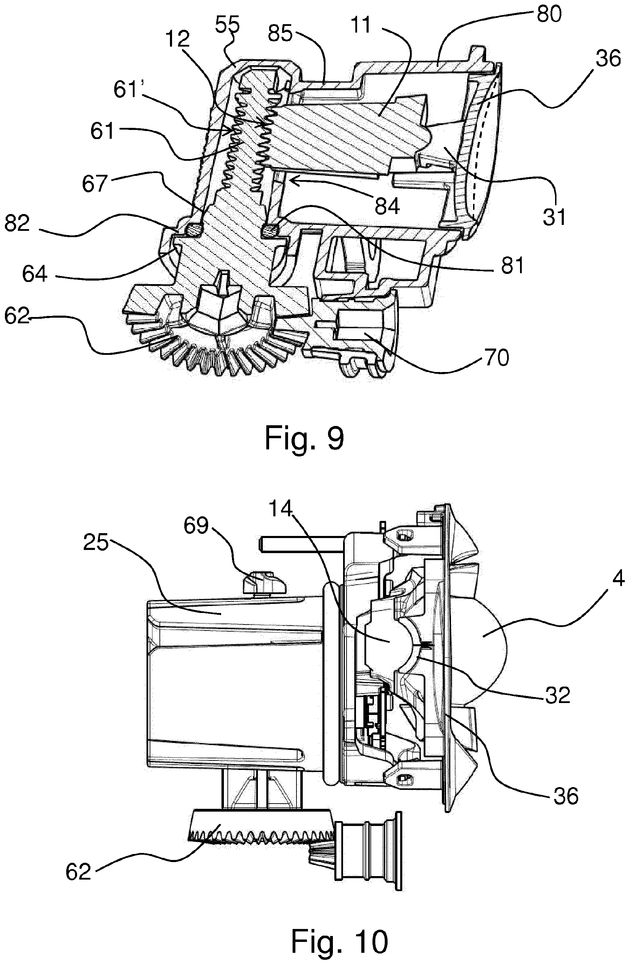

Le secteur de roue dentée 11 est donc engrené avec la portion filetée 61, comme on peut le voir en figures 8 et 9.

Les dents 12' peuvent être droites, le secteur de roue dentée étant alors une portion cylindrique, composée elle-même d'une portion de cylindre portant des dents droites.

Alternativement, les dents 12' forment une denture hélicoïdale. Autrement dit, le secteur de roue dentée 11 comprend une portion d'un cylindre portant ces dents, ces dernières ayant une inclinaison et une courbure correspondant à une portion de filetage.

Selon l'invention, la lentille 1 est une pièce monobloc. La partie de déviation 4 et les parties d'articulation mobiles 9, 10, et le secteur de roue dentée 11 sont donc dans ce cas constituées de la même matière, notamment elles sont venues de matière en une seule pièce.

Notamment, cette lentille 1 est en PMMA et est donc optiquement performante et son secteur de roue dentée 11 résiste bien au fluage, pouvant donc subir de nombreux réglages sans se déformer significativement.

Le secteur de roue dentée 11 est ici formé par une bande avec une première extrémité reliée à la première partie d'articulation mobile 9 et une deuxième extrémité portant la denture 12' de ce secteur de roue dentée, formant ainsi un bras s'étendant selon sa longueur d'arrière en avant du dispositif, c'est-à-dire en allant des dents 12' vers la première partie d'articulation mobile 9.

Dans cet exemple, la hauteur h de cette bande permet un certain débattement de la lentille 1.

Les faces les plus grandes de ce bras sont disposées environ verticalement, la figure 8 laissant apparaitre l'une de celles-ci. Ces faces sont séparées à l'arrière par la surface entrainée 12 et en haut et en bas par une tranche inférieure et une tranche supérieure.

La largeur de ces tranches correspond à l'épaisseur e du secteur de roue dentée 11.

La source lumineuse 6 est dans cet exemple, une diode électroluminescente, placée en amont de la lentille 1 selon le sens d'émission des rayons lumineux.

Le dispositif lumineux comprend un support 20 supportant à la fois cette source lumineuse 6 et la lentille 1. Ce support est fixé directement sur le boitier 50. Il positionne et fixe ainsi directement la source 6 dans le boitier 50 par rapport à la lentille.

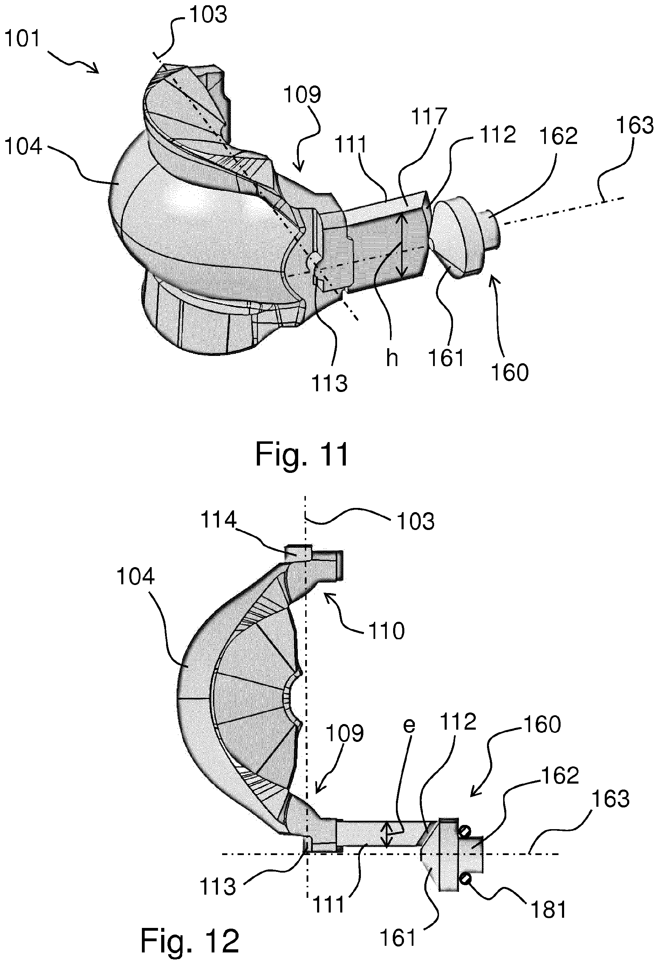

La ligne de coupure est ici obtenue par un agencement mutuel de la lentille 1, notamment de ses dioptres avant et arrière, et de la source lumineuse 6, comme cela est connu, notamment des documents EP1762776, en particulier les modes de réalisation correspondant aux figures 11 et suivantes, et/ou EP1970619, en particulier le mode de réalisation de la figure 1.

Selon cet exemple, l'axe de rotation 3 passe sensiblement par la source lumineuse 6. La lentille 1 peut en outre présenter un foyer au niveau de la source lumineuse 6. On dispose de la sorte d'un faisceau dont la forme et la répartition des intensités lumineuses à l'intérieur de cette forme ne varient pas en fonction du positionnement angulaire de la lentille 1 et donc ne dépendent pas du positionnement de la ligne de coupure.

La source lumineuse est dans cet exemple une diode électroluminescente ou LED 6.

Selon le sens de rotation de la vis de réglage 60, le secteur de roue dentée 11 bascule vers le haut ou vers le bas, entraînant le réglage de la partie de déviation 4 respectivement vers le bas ou vers le haut.

Ainsi, on assure le déplacement de l'image projetée de la LED 6 et donc du faisceau lumineux correspondant. Notamment, dans le cadre d'un faisceau d'antibrouillard, on peut régler la hauteur de sa ligne de coupure.

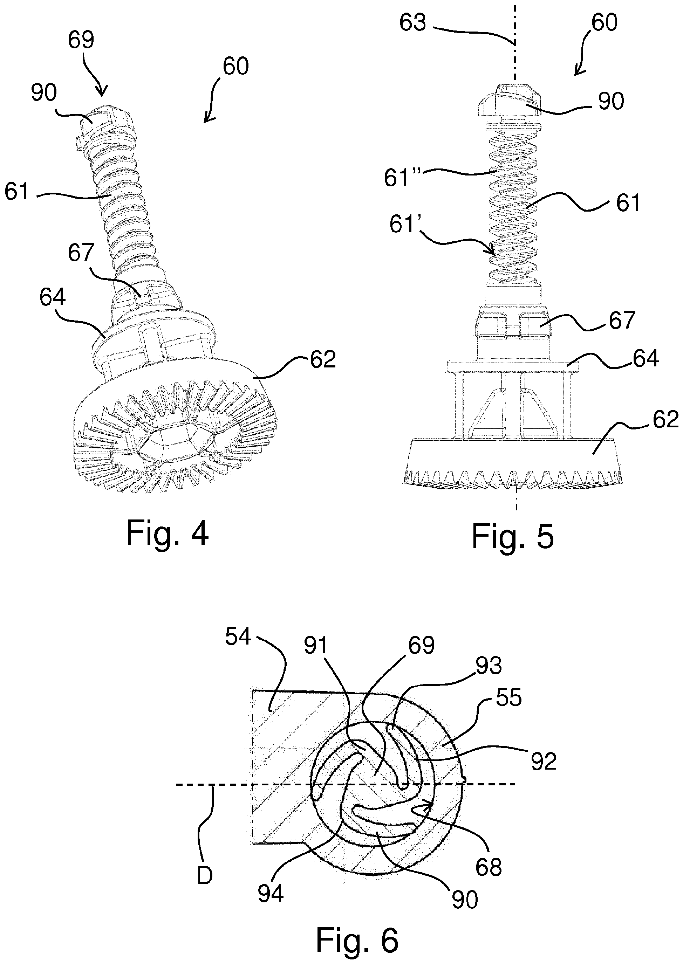

Les figures 4 à 6 illustrent la vis de réglage 60du dispositif lumineux illustré en figures 1 à 3 et 8 à 10.

La vis de réglage 60 s'étend selon un axe longitudinal 63 autour duquel elle est entraînée en rotation.. Elle comprend successivement, le long de cet axe longitudinal 63, une première extrémité formée par une roue de réglage 62, un palier de rotation 64, des ergots de clippage 67, la portion filetée 61, et une deuxième extrémité formée par une portion porteuse 69 portant des lamelles 90. Les lamelles 90 forment ici et les moyens élastiques de la vis de réglage.

La portion filetée porte le filetage 61", dont la surface forme la surface d'entrainement 61' des dents 12' du secteur de roue dentée 11.

La roue de réglage 62 forme ici le moyen d'actionnement en rotation de la vis de réglage 60 dans un sens ou dans l'autre.

Comment on peut plus précisément le voir en figure 6, les lamelles 90 sont agencées de manière à être flexibles et élastiquement déformables vers la portion porteuse 69. Ici la flexibilité est assurée par leur forme particulière. Cela n'est cependant pas limitatif.

Ici grâce à leur forme et à leur positionnement, ces lamelles 90 peuvent être comprimées transversalement par rapport à l'axe longitudinal 63 de la vis de réglage 60.

Chacune de ces lamelles 90 comprend une première extrémité et une deuxième extrémité. La première extrémité de chaque lamelle est formée par une base 91 qui s'étend radialement depuis la portion porteuse 69. La deuxième extrémité est une extrémité libre 93, ici formée par un bout arrondi.

La lamelle 90 présente un coude 94 entre la base 91 et une portion de flexion 92 de la lamelle, située entre ce coude 94 et l'extrémité libre 93. La portion de flexion 92 de chaque lamelle présente une courbure telle, que l'ensemble des extrémités libres 93 de chacune des lamelles 90 peuvent être circonscrites dans un cercle dont le centre est sur l'axe longitudinal 63 de la vis de réglage 60. Autrement dit, chacune des extrémités libres 93 passe par un seul et même cercle.

Par ailleurs, cette courbure des portions de flexion des lamelles 90 est telle qu'au niveau des extrémités libres 93, la courbure de chaque lamelle 90 est tangente à ce cercle circonscrit. Ainsi lorsque l'on insère la portion porteuse 69 dans le logement prévu pour la vis de réglage 61, à savoir ici une cassette 55 du boitier 50, ce logement ayant une forme cylindrique, les lamelles 90 vont être environ tangentes à la paroi intérieure de cette cassette 55. De ce fait, le glissement des lamelles 90 contre la paroi interne de la cassette 55 sera facilité, comme on peut le voir par exemple en figure 6.

Par ailleurs, cette forme courbée des lamelles 90 permet de déformer celles-ci de façon plus aisée et de manière plus souple.

Pour favoriser la rotation de la vis de réglage 60 dans la cassette 55, les extrémités libres 93 présentent une forme arrondie, notamment une portion de cylindre circulaire d'axe parallèle à celui de l'axe longitudinal 63 de la vis de réglage 60.

Comme illustré en figures 4 et 5, lorsque la vis de réglage 60 est démontée du dispositif lumineux, les lamelles 90 ne sont plus sous contrainte et sont écartées de la portion porteuse 69, de telle sorte que le cercle circonscrit aux extrémités libres 93 de ces lamelles est d'un diamètre supérieur au diamètre de la portion filetée 61, filetage compris.

Par exemple sur la figure 6, selon la direction radiale, les extrémités libre 93 de chaque lamelle comprennent le point le plus éloigné dans chaque lamelle 90 de l'axe longitudinal 63 de la vis de réglage 60. La distance de ce point à l'axe longitudinal 63 selon une direction radiale est supérieure au rayon de la portion filetée 61.

Autrement dit, si l'on insère la vis de réglage 60 dans un manchon dont le diamètre correspond environ au diamètre du filetage de la portion filetée 61, ces lamelles 90 doivent être comprimées pour pouvoir rentrer dans ce manchon.

Dans cet exemple, le diamètre de la paroi intérieure de la cassette 55 est inférieur à celui de ce cercle circonscrit. De ce fait, quand la vis de réglage 60 est montée dans la cassette 55, ces lamelles sont en précontrainte.

Comme on peut le voir en figure 5, l'extrémité supérieure de la vis de réglage 60 s'inscrit environ dans un cône, facilitant ainsi son engagement dans la cassette 55.

La vis de réglage 60 peut être formée d'une seule pièce, par exemple être venue de matière en polyoxyméthilène.

Comme illustré notamment aux figures 1 et 9, le logement 52 peut être délimité par une paroi cylindrique 80 du boitier 50, sur laquelle est montée la glace de fermeture 54. Le logement 52 est délimité à l'avant par cette glace de fermeture 54 et à l'arrière par une paroi de fond du boitier 50.

De manière non limitative, ce boitier 50 présente un manchon 85 s'étendant depuis la paroi de fond du boitier et débouchant dans la cassette 55 de logement de la vis de réglage 60. Ce manchon 85 relie ainsi le logement 52 et la cassette 55.

La vis de réglage 60 est agencée dans la cassette 55 et est clippée dans le boitier 50. La vis de réglage 60 est ainsi bloquée en translation dans cette cassette 55.

Par exemple, comme illustré, les ergots de clippage 67 sont formés par des saillies qui sont radiales par rapport à la vis de réglage 60 et sont agencés contre des portions complémentaires non présentées sur ces figures, situées à proximité d'une ouverture d'insertion de la vis de réglage 60 dans la cassette 55. Ces ergots de clippage 67 permettant ainsi d'empêcher la vis de réglage 60 de bouger en translation vers le bas.

De la même manière, dans cet exemple, le palier de rotation 64 est agencé contre une paroi circulaire 82 du boîtier 50, de manière à empêcher la vis de réglage 60 de se déplacer en translation vers le haut.

La paroi circulaire 82 délimite l'ouverture d'insertion de la vis de réglage 60. Les bords de cette ouverture d'insertion, donc la paroi circulaire 82 à ce niveau, sont logés entre le palier de rotation 64 et ces ergots de blocage 67, de manière à plaquer le palier de rotation 64 contre la face plane extérieure de cette paroi circulaire 82. En plus du blocage en translation, cela facilite une rotation étanche de la vis dans l'ouverture d'insertion.

Un joint 81 annulaire est ici agencé entre les ergots de clippage 67 et ce palier de rotation 64, de manière à assurer l'étanchéité du boîtier 54 au niveau de l'ouverture d'insertion permettant de monter la vis de réglage 60. Ce joint 81 peut par exemple être posé préalablement sur la vis de réglage 60.

Dans cet exemple, un épaulement circulaire, situé entre la paroi circulaire 82 et les portions complémentaires, permet d'accueillir le joint 81.

Le masque 30, forme un élément de plaquage. Comme illustré en figure 1, le support 20, la lentille 1 et le masque 30 s'empilent, dans cet ordre, dans le boitier 50. Ce faisant, le masque 30 se fixe sur le support 20 par l'intermédiaire de pattes de fixation 33 munies d'un trou, des crochets 23 du support venant se clipper dans ces trous, comme on peut le voir en figures 8 et 10.

En étant ainsi empilé, le masque 30 plaque la lentille 1 contre son support 20, comme il sera détaillé plus loin.

Dans cet exemple, le manchon 85 sert de moyen de guidage du bras formé par le secteur de roue dentée 11 lors du montage en empilement du dispositif, comme il sera expliqué plus loin.

Le masque 30 présente une ouverture centrale 34. Une fois le projecteur antibrouillard assemblé, le masque 30 entoure la lentille 1, sa partie de déviation 4 se logeant dans l'ouverture centrale 34. De l'extérieur, vu de face, pratiquement seulement cette partie de déviation 4 de la lentille 1 et la face avant du masque 30 sont visibles.

Le support 20 comprend ici en outre une carte de commande électronique 24. Cette carte 24 sert, notamment, à contrôler la LED 6. Des bras 21, 22 du support 20 s'étendent de part et d'autre de cette carte de commande 24, selon l'axe de rotation 3.

Le support 20 est dans cet exemple un dissipateur thermique, présentant à l'arrière des ailettes 25. Ce dissipateur thermique 20 est plus particulièrement en relation d'échange thermique avec la LED 6, notamment via la carte électronique 24.

Pour favoriser la dissipation thermique et la compacité du projecteur, la paroi de fond du boitier 50 comprend dans cet exemple une ouverture arrière, non représentée, à travers laquelle passent les ailettes 25. Le projecteur comprend dans ce cas un joint 58, annulaire, afin d'assurer une étanchéité entre le support 20 et la paroi du fond du boîtier 50.

Le dissipateur thermique peut être en métal, notamment en aluminium, ou encore en polymère thermo-conducteur.

Le boitier 50 peut comprendre un dispositif de ventilation, tel qu'un trou de ventilation 56 traversant la paroi latérale du boitier 50 et bouché par une membrane semi-perméable 57. Cela permet de mettre l'intérieur du boitier 50 en communication avec l'extérieur.

La face interne du boîtier 50 peut comprendre des nervures de clippage, à savoir d'emboîtement élastique, pour fixer le support 20 dans le boitier 50 par des moyens complémentaires de ces nervures.

Dans cet exemple, le fond du boitier comprend également un connecteur 51 pour alimenter électriquement la source lumineuse 6.

Le boitier 50 présente également une protubérance formant une bague de maintien 59 d'un pignon de renvoi 70, dont l'axe longitudinal est perpendiculaire à celui de la vis de réglage 60. Le pignon de renvoi 70 coopère avec les dents de la roue de réglage 62, de manière à ce que l'actionnement du pignon 70 entraine la rotation de la roue de réglage 62 et donc de la vis de réglage autour de l'axe longitudinal 63.

Le masque 30, illustré en détails en figure 7, comprend une armature 36 qui forme l'enjoliveur de ce masque. En effet, comme on peut le voir en figure 2, la partie avant de l'armature 36 forme la partie visible depuis l'extérieur du dispositif lumineux et permet de masquer le fond du boîtier 50.

Dans cet exemple, l'enjoliveur 36 entoure totalement la lentille 1, une fois le dispositif lumineux assemblé.

Dans cet exemple, le masque 30 comprend deux portions de contacts 31 et 32. Celles-ci sont ici formées par des protubérances s'étendant environ selon le sens de l'empilement des éléments à l'intérieur du boîtier 50. Les portions de contact 31, 32, sont tournées vers l'arrière de l'armature 36, de sorte qu'elles ne sont pas visibles depuis l'extérieur. Une fois le dispositif lumineux assemblé la première portion de contact 31 et la deuxième portion de contact 32, viennent en contact avec des portions externes 13 et 14, respectivement de la première partie d'articulation mobile 9 et de la deuxième partie d'articulation mobile 10.

Comme illustré en figures 1 et 3, la portion externe de la première partie d'articulation mobile 9 et la portion externe de la deuxième partie d'articulation mobile 10 sont formées par une première portion cylindrique 13 et une deuxième portion cylindrique 14.

Comme illustré en figure 3, les bras du support 20 sont formés par des portions de disque 21, 22, comprenant chacun une tranche 21a, 22a, chaque tranche étant logée dans des formes complémentaires, à savoir des portions concaves 15, 16 de la lentille 1 situées à l'arrière de celle-ci.

Les portions de contact 31, 32 se terminent par une forme concave complémentaire des portions cylindriques 13, 14.

Ainsi, la première partie d'articulation mobile 9 tourne aisément entre la portion de contact 31 et la portion de disque 21. De même, la deuxième partie d'articulation mobile 10 tourne aisément entre la portion de contact 32 et la portion de disque 22.

Les portions de disque 21, 22 et les portions de contact 31, 32 maintiennent la lentille 1 d'une part sur le support 20, et d'autre part libre en rotation par rapport à ce dernier. Les portions de disque 21, 22 et les portions de contact 31, 32 forment donc ici des parties d'articulation fixes entre lesquelles pivotent les parties d'articulation mobile 9, 10, formant ainsi deux articulations de la lentille.

Dans cet exemple, les portions concaves 15, 16, de la lentille 1 sont situées entre les portions cylindriques 13 et 14, selon l'axe de rotation 3. L'armature 36 plaque ainsi fermement les parties d'articulation mobile 9, 10 contre le support 20.

Ce décalage entre les deux parties d'articulation fixe de chaque articulation, à savoir le décalage selon l'axe de rotation 3 entre la portion cylindrique correspondante 13, 14 et la portion concave correspondante 15, 16, permet de placer plus facilement la lentille 1 avec le secteur de roue dentée 11 formant un bras s'étendant vers l'arrière.

Les portions de disque 21, 22, présentent des faces de contact 21b, 22b, agencées transversalement et à l'opposé de la source lumineuse 6. Elles forment des paliers de contact glissant, coopérant chacune avec une face plane de la partie d'articulation mobile correspondante 9, 10.

Dans cet exemple, ces faces planes et ces faces de contact 21b, 22b sont inclinées vers l'intérieur, à savoir vers l'espace compris entre chaque articulation de la lentille 1. Cela permet un meilleur empilement de la lentille 1 avec son support 20 dans le boitier 50, les parties d'articulation mobiles 9, 10, se plaçant de part et d'autre des portions cylindriques 21 et 22.

Comment illustré sur la figure 3, le support 20 comprend un décalage vers l'avant permettant le positionnement de la carte 24, non représentée sur cette figure, et de la LED 6, de manière à ce que l'élément photoémissif de cette dernière passe au niveau de l'axe de rotation 3.

Comme illustré en figure 8 et 10, le masque est clippé sur le support 20 et la portion de contact 31 est en contact avec la partie cylindrique 9, appuyant ainsi sur celle-ci. Le boîtier 50 n'a pas été représenté sur ces figures 8 et 10 pour des raisons de clarté du dessin.

Le masque 30 en se plaquant contre la lentille 1 permet non seulement de plaquer celle-ci contre le support 30 mais également de plaquer le secteur de roue dentée 11 contre la vis de réglage 60.

Ainsi dans le mode de réalisation exemplifié sur ces figures, le support 20 ainsi que la vis de réglage 60 forment chacun séparément un élément d'appui contre laquelle est plaquée la lentille 1.

Comme on peut l'observer en figures 8 et 9, le bras formé par le secteur de roue dentée 11 est agencé entre la portion de contact 31 et la vis de réglage 60, plus particulièrement sa portion filetée 61, selon une direction d'alignement parallèle à celle de la direction X d'émission du faisceau lumineux par le projecteur.

Dans cet exemple, l'enjoliveur 36 est flexible et élastiquement déformable, ici sur les côtés du masque 30, selon une direction de flexion F. En figure 8 les pointillés représentent la position de flexion maximale de l'enjoliveur 36.

Cette direction de flexion F de l'enjoliveur 36 correspond dans cet exemple à la direction d'alignement de la portion de contact 31, du bras formé par le secteur de roue dentée 11 et de la vis de réglage 60.

Quand la vis de réglage 60 est actionnée, la lentille 1 pivote jusqu'à une certaine limite, par exemple en butant contre le support 30. Dans un tel cas, le secteur de roue dentée 11 force sur la vis de réglage 60. L'agencement du secteur de roue dentée 11, permet le transfert de cet effort sur la vis de réglage 60 aux portions de contact 31, 32, qui étant rigides, entraînent la déformation de l'enjoliveur 36 selon la direction de flexion F. Ainsi, les dents du secteur de roue dentée 11 se désengagent progressivement de la portion filetée 61, jusqu'à atteindre la position de flexion maximale, au niveau de laquelle les dents 12' du secteur de roue dentée 11 sont complètement désengagées de la portion filetée 61. Il y a alors débrayage de la lentille 1 de la vis de réglage 60.

Aussitôt lentille débrayée, l'élasticité de l'enjoliveur 36 entraîne la lentille 1, et donc le secteur de roue dentée 11, en rappel vers l'arrière, ramenant le secteur de roue dentée 11 en engrènement dans la portion filetée 61.

Le masque 30 peut être monté dans le boîtier 50 de manière à être légèrement précontraint sur la lentille. Ici, l'interférence entre le diamètre le filetage de la portion filetée 61 et du secteur de roue dentée 11 est de 3,5 mm. On pourra donc avoir sur ce projecteur un déplacement de 3 ou 5 mm vers l' avant du secteur de roue dentée 11 avant le débrayage celui-ci.

Par interférence entre deux parties montées ensemble, on entend que ces parties ont été rapprochées davantage qu'elles ne le seraient sans déformation. La distance entre leur position de montage en contact sans déformation et la position montée en déformation correspond à la valeur de l'interférence.

Dans cet exemple, la flexibilité des lamelles 90 de la vis de réglage joue un rôle de rattrapage de jeu au niveau de l'articulation de la lentille 1.

En effet en cas de jeu entre les parties d'articulation mobiles 9, 10, et les portions de disque 21, 22 et les portions de contact 31, 32, la flexibilité des lamelles 90 permet de rattraper les décalages éventuels.

Selon une réalisation de l'invention et notamment dans cet exemple, le masque 30, la lentille 1 et le support 20 sont montés ensemble de manière à ce que les portions de contacts 31, 32, soient en interférence avec les portions cylindriques 13, 14, de 0,2 mm selon la direction de flexion F.

En d'autres termes, une fois le dispositif lumineux assemblé, la ou les lamelles 90 en contact avec la paroi de coopération 68, donc à l'arrière de la vis de réglage, vont être comprimées de manière à se rapprocher de l'axe longitudinal 63 de la vis de réglage 60, d'environ 0,2 mm. Cette ou ces lamelles 90 sont donc précontraintes, ce qui permet de davantage rattraper les jeux.

Par ailleurs, les lamelles 90 arrière étant davantage précontraintes que celle située à l'avant, elles exercent donc une force de rappel de la portion filetée 61 vers le secteur de roue dentée 11.

Ainsi lorsque comme illustré dans la figure 10, l'armature 36 appuie via la portion de contact 31 sur le secteur de roue dentée 11, ce dernier appuie sur la vis de réglage 60 et pousse donc celle-ci légèrement vers l'arrière du dispositif lumineux, entraînant également à l'arrière la portion porteuse 69 et comprimant les lamelles 90 se situant en arrière de la vis de réglage 60. En figure 6, où la portion porteuse 69 est représentée à l'intérieur de la cassette 55, cela concerne les deux lamelles dont l'extrémité libre 93 est située à l'arrière de l'axe longitudinal 63, soit les lamelles situées à droite en figure 6. En raison du plaquage par le masque 30, la lamelle la plus à l'arrière est la plus déformée, puisqu'elle est transversale à la direction de déplacement D de la portion porteuse 69.

Ici les lamelles 90 sont au nombre de trois cela permet que, quelle que soit l'orientation de la vis de réglage 60 selon la position conférée à la lentille 1, il y ait toujours au moins une lamelle 90 en compression contre la portion de coopération 68. De plus, chaque lamelle 90 s'étend de sa base 91 jusqu'à son extrémité libre 93 quasiment jusqu'au niveau de la base de la lamelle suivante. Ainsi au fur et à mesure que la vis de réglage 60 tourne, une lamelle 90 glisse contre la portion de coopération 68 et petit à petit sa compression va diminuer, au fur et à mesure qu'elle s'écarte de la direction de déplacement D et qu'elle évolue vers l'avant de la cassette 55. En parallèle, la lamelle précédente, selon le sens de rotation, va être de plus en plus comprimée, puisqu'elle va prendre une orientation de plus en plus transversale par rapport à la direction de déplacement D et passer à l'arrière de la cassette 55. Ainsi au fur et à mesure de la rotation de la vis de réglage 60, la contrainte est transférée de lamelle en lamelle.

On a donc une continuité de la contrainte globale sur la vis de réglage 60. Cette contrainte conserve une valeur constante, se répartissant de façon continue et progressive d'une lamelle à l'autre. La force de contrainte rappelant la portion filetée 61 vers le secteur de roue dentée 11 est donc ici constante.

Ici, les lamelles sont de formes identiques, ce qui facilite une répartition uniforme de la contrainte de la portion porteuse 69 contre la paroi de coopération 68.

Par ailleurs, il y a toujours une lamelle 90 alignée avec la portion porteuse 69 et le bras formé par le secteur de roue dentée11, la portion porteuse 69 étant entre cette lamelle 90 et le secteur de roue dentée 11.

Dans l'exemple illustré, les portions de contact 31, 32, les portions cylindriques 13, 14, et les portions de disque 21, 22 sont plus petites d'un côté du projecteur, ici du côté du secteur de roue dentée 11, que de l'autre côté du projecteur. Cela permet de réaliser des détrompeurs de manière à positionner le masque 30 dans le bon sens autour de la lentille 1, et également de cette lentille 1 sur ce support 20.

Egalement, comme ici, le masque 30 peut comprendre un pion 38 saillant depuis l'arrière de l'enjoliveur 36 et s'étendant longitudinalement en direction du fond du boitier. Ce pion 38 et le support 20 sont agencés de manière à ce que le pion 38 ne puisse passer à côté du support que si la lentille 1 est placée correctement sur le support 20.

Comme illustré en figure 9, le bras portant le secteur de roue dentée 11 passe au travers du manchon 85 et pénètre par une ouverture 84 à l'intérieur de la cassette 55.

Le montage du projecteur peut être réalisé de la façon suivante.

Dans un premier temps :
- on clippe la vis de réglage 60 dans la cassette de réglage 55, au travers de l'ouverture d'insertion ;
- on monte la lentille 1 sur son support 20 et on clippe le masque 30 sur le support et autour de lentille 1, plaquant ainsi la lentille 1 contre le support 20.

Dans un deuxième temps, on glisse l'ensemble masque/lentille/support dans le boîtier 50, le secteur de roue dentée 11 passant au travers de l'ouverture 84 de la cloison qui sépare le manchon 85 de la cassette 55.

Selon une réalisation de l'invention et comme dans l'exemple illustré, le masque 30 et/ou le support 20, ainsi que le boîtier 50 sont ici agencés de manière à entraîner le positionnement de l'ensemble masque/lentille/support dans le boîtier 50. Notamment, des rails de guidage 86 permettent de guider le glissement du support 20 dans le boîtier 50, de manière à faciliter le passage du secteur de roue dentée 11 au travers de l'ouverture dans la cloison séparant la cassette 55 du manchon 85, et l'engrènement avec la vis de réglage 60.

Dans l'exemple illustré, afin de faciliter le positionnement de l'ensemble masque/lentille/support dans le boîtier 50, le manchon 85 est réalisé de manière former un moyen de guidage du bras formant le secteur de roue dentée 11. En effet, comment on peut le voir en figure 1 et 9, ce manchon 85 présente une hauteur permettant d'accueillir le bras formant le secteur de roue dentée 11 et le débattement de celui-ci .

Afin de guider ce bras, le manchon 85 présente une largeur interne « 1 » correspondant à la distance transversale entre ses parois internes. Cette largeur interne « 1 » est supérieure à l'épaisseur « e » du secteur de denté 11 mais inférieure au diamètre de la paroi interne de la cassette 55.

De ce fait, le manchon 85 permet un guidage longitudinal et vertical du bras formant le secteur de roue dentée 11.

Ainsi, quand on glisse l'ensemble masque/lentille/support dans le boîtier 50, l'extrémité du secteur de roue dentée portant la denture 12 va glisser dans ce manchon 85 jusqu'à une ouverture 84, au travers de laquelle il va entrer dans la cassette 55 et venir s'engrener avec le filetage 61' de la portion de roue dentée 61. En effet, la portion filetée 61 s'étend en vis-à-vis de cette ouverture 84.

Pour faciliter le passage du secteur de roue dentée 11 au travers de l'ouverture 84 lors du montage, cette ouverture 84 présente des bords chanfreinés, formés par la tranche de la paroi séparant la cassette 55 du manchon 85. Ces bords sont orientés vers l'intérieur du logement 82 et forment ainsi un entonnoir guidant le secteur de roue dentée 11 jusqu'à la portion filetée 61.

Ensuite, on peut monter le renvoi d'angle 70 dans la bague de maintien 59, puis fermer le projecteur par la glace de fermeture 54.

Dans cet exemple, la compression des lamelles 90 permet d'absorber les écarts de jeu qu'il pourrait y avoir dans les positionnements des différents éléments du dispositif lumineux. Cela est particulièrement avantageux dans l'exemple illustré, dans lequel les différents éléments sont empilés de l'avant vers le fond du boîtier 50.

Dans le mode de réalisation illustré, la précontrainte de l'armature 36 en raison de sa déformation selon le direction de flexion F une fois montée dans le dispositif lumineux est supérieure à la raideur des ailettes 90 selon la direction de flexion F, qui est parallèle à la direction de déplacement D la portion porteuse 69. De ce fait, la précontrainte de l'armature 36 entraine une précontrainte de la vis de réglage 60 telle, que les lamelles à l'arrière de la vis de réglage subissent une contrainte supérieure aux lamelles situées à l'avant de la vis de réglage.

Par ailleurs, la précontrainte du masque 30, en raison la flexibilité de l'armature 36, permet que lorsque la vis de réglage 60 tourne sur elle-même sans blocage, il n'y a aucune variation dans la compression et la flexibilité de l'armature 36. La position de la lentille 1 est ainsi peu impactée.

Par ailleurs, une fois le dispositif lumineux monté, la flexion de l'armature 36 et des lamelles 90 étant à l'équilibre, en cas de blocage la vis de réglage, la contrainte va davantage se porter sur la flexibilité du masque 30 et entrainer le débrayage du secteur de roue dentée 11.

Dans l'exemple illustré, les lamelles 90 peuvent présenter une forme et une certaine souplesse pour se déformer de 2 mm vers la portion porteuse 69, mais requérir une contrainte beaucoup plus forte pour se déformer davantage.

En effet comme illustré en figure 6, le déplacement de l'extrémité libre 93 de la lamelle 90 vers la portion porteuse 69 est relativement facile au début car la flexion de la portion de flexion 92 par rapport à la base 91 est faible. Il faut en revanche une flexion beaucoup plus importante pour comprimer davantage cette lamelle.

Dans cet exemple, lorsque la vis de réglage 60 n'est pas montée dans le boitier 50, le cercle dans lequel les extrémités libres 93 sont circonscrites a un diamètre supérieur à celui de la paroi interne de la cassette 55. Ainsi une fois la vis de réglage montée dans le boitier, les lamelles 90 sont précontraintes. Notamment, cette précontrainte est telle, qu'une fois le dispositif assemblé, toutes les lamelles 90 sont en contact contre la paroi interne de la cassette 55, y compris celles placées à l'avant, à savoir entre la lentille 1 et la portion porteuse 69, comme illustré en figure 6.

Ainsi d'une manière générale, la vis de réglage permet en elle-même de rattraper les jeux de montage à l'intérieur du dispositif, notamment du dispositif lumineux, et permet ainsi d'assurer le maintien en engrènement de la vis de réglage et de la pièce réglable.

Par ailleurs, selon une réalisation, la vis de réglage permet également la coopération avec un élément de plaquage qui lui aussi se déforme par flexibilité pour permettre de plaquer la pièce réglable contre la vis de réglage et notamment pour permettre le débrayage de celle-ci.

Par ailleurs, le fait que le secteur de roue dentée 11 et la lentille 1 soient venus de matière en une seule pièce, permet également de transmettre plus facilement la force de rappel exercée par les lamelles 90 et/ou par le masque 36. Notamment, cela permet de transmettre directement la force de rappel de la surface entraînée et de la surface d'entraînement l'une vers l'autre.

Plus particulièrement, dans la réalisation où le secteur de roue dentée 11 forme un bras, ce bras peut être aligné avec la direction de flexion F. Ainsi la force de rappel générée par la flexibilité du masque 30 et la force de rappel générée par les lamelles 90 sont transmises beaucoup plus efficacement respectivement vers la vis de réglage 60 et vers l'articulation de la lentille 1.

Les moyens élastiques ne sont pas limités aux lamelles décrites. Ils peuvent être formés de lamelles en d'autres matériaux ou d'autres formes, ou bien être des éléments en caoutchouc ou en mousse élastique.

Les figures 11 et 12 illustrent un deuxième mode de réalisation. Celui-ci est une variante de réalisation du premier mode de réalisation.

Le masque, la glace fermeture, et le support de la LED n'ont pas été représentés puisqu'ils sont identiques à ceux du premier mode de réalisation.

La lentille 101, comprend une partie optique 104 identique à la partie optique 4 de la lentille 1 du premier mode de réalisation. Cette lentille 101 comprend également une première partie d'articulation mobile 109 et une deuxième partie d'articulation mobile 110. Ces parties d'articulation mobiles 109 et 110 comprennent chacune une portion cylindrique 113, 114. Ces dernières sont agencées avec le support de LED et le masque de la même manière que dans le premier mode de réalisation. Cet agencement n'est donc pas décrit ici.

D'ailleurs dans cet exemple, la deuxième partie d'articulation mobile 110 est identique deuxième partie d'articulation mobile 10 de la lentille 1 du premier mode de réalisation.

La lentille 101 du deuxième mode de réalisation diffère de la lentille 1 du premier mode de réalisation par sa première partie d'articulation mobile 109. En effet, cette lentille 101 comprend également un secteur de roue dentée 111 mais celui-ci est différent du secteur de roue dentée 11 du premier mode de réalisation.

Dans ce deuxième mode de réalisation, le secteur de roue dentée 111 est un secteur de roue dentée conique d'axe 103, ici confondu avec l'axe de rotation 103 de lentille 101. Autrement dit, la surface entraînée 112 formée par la tranche de ce secteur de roue dentée 111 est oblique par rapport à une direction parallèle à l'axe de rotation 103 de la lentille 101.

Ce secteur de roue dentée 111 coopère avec une roue dentée conique 160, qui forme ici un pignon 160 d'entraînement de ce secteur de roue dentée 111. Ce pignon 160 comprend une surface d'entrainement 161 formée par une denture, dont les dents n'ont pas été représentées sur ces figures. Cette denture est agencée de manière oblique par rapport à l'axe de rotation 163 du pignon 160.

Ainsi le secteur de roue dentée 111 et le pignon 160 forment un engrenage à axes non parallèles, notamment ici à axes concourants.

Plus particulièrement, dans cet exemple l'axe de rotation 103 de la lentille 101 est perpendiculaire à l'axe 163 de rotation du pignon 160.

Ainsi, le dispositif présente un accès direct par l'arrière, pour l'entraînement du secteur de roue dentée 111 et donc le réglage de la position de la lentille.

Pour cela le pignon 160 comprend à l'arrière de sa denture, un cylindre d'actionnement 162 qui se termine, à droite en figure 12, par une empreinte non représentée et apte à coopérer avec un outil ou un moyen d'actionnement automatique. Ce cylindre d'actionnement 162 traverse le boîtier du dispositif, boîtier non représenté ici. Un joint 181 est agencé pour être plaqué entre le boîtier et l'extrémité du pignon 160 portant la denture.

Dans ce deuxième mode également, le secteur de roue dentée 111 forme un bras s'étendant selon une longueur allant d'avant en arrière, entre la première partie d'articulation mobile 109 et la denture 112 du secteur de roue dentée 111. Ainsi, comme dans le premier mode de réalisation, les efforts transmis par le masque plaquant la lentille contre son support mais également pour pouvoir rappeler celle-ci vers le pignon 160 sont transmis directement par ce bras.

Le bras s'étend selon une longueur supérieure à son épaisseur « e », de manière à présenter certaine élasticité transversalement à sa longueur. La lentille peut être montée de manière à ce que le bras formé par le secteur de roue dentée 111 soit soumis à une précontrainte contre le pignon 160, cette précontrainte étant dirigée parallèlement à l'axe de rotation 103 de la lentille vers le centre du dispositif lumineux, à savoir en figure 12 vers le haut. De cette manière, cette précontrainte permet d'exercer une force de rappel transversale de la denture 112 du secteur de roue dentée 111 vers la denture 161 du pignon 160. Ainsi, le rattrapage de jeu entre le pignon 160 et le secteur de roue dentée 111 est exercé par l'élasticité du bras lui-même.

La présente invention est particulièrement avantageuse dans le cadre d'un projecteur antibrouillard. Cependant, elle pourrait être appliquée à d'autres dispositifs lumineux.

Par exemple, à des dispositifs lumineux avec une lentille en rotation autour d'un axe vertical pour réaliser une partie mobile d'un faisceau lumineux, notamment un premier faisceau avec une ligne de coupure oblique ou verticale, ce premier faisceau étant destiné à être combiné à un faisceau avec une ligne de coupure horizontale.

Selon une réalisation de l'invention, cette combinaison peut s'appliquer à un dispositif lumineux selon l'invention générant un faisceau lumineux élémentaire avec une coupure oblique ou verticale destiné à être combiné à un deuxième faisceau élémentaire avec la ligne de coupure horizontale. Le faisceau à coupure oblique se déplaçant horizontalement par actionnement de l'élément optique, par exemple en fonction des virages pris par le véhicule équipé du dispositif lumineux ou encore en fonction des véhicules arrivant en sens opposé.

## Revendications

1. Dispositif lumineux de véhicule comprenant :
- une lentille (1; 101) destinée à dévier les rayons lumineux émis par une source lumineuse (6), et comprenant un secteur de roue (11 ; 111) avec une surface entrainée (12 ; 112), le secteur de roue étant venu de matière avec l'ensemble de la lentille,
- un moyen d'entrainement (60 ;160) avec une surface d'entrainement (61' ; 161) agencée de manière à ce que la surface d'entrainement soit en contact avec la surface entrainée et à ce que le mouvement de la surface d'entrainement entraine un mouvement de la lentille ;
**caractérisé en ce que** le secteur de roue est un secteur de roue dentée (11 ; 111), les reliefs de la surface entrainée (12 ; 112) étant des dents (12') et le secteur de roue dentée (11 ; 111) forme un bras s'étendant selon sa longueur entre une première extrémité reliée à la lentille (1; 101) et une deuxième extrémité libre, cette dernière portant la surface entrainée (12 ; 112).

2. Dispositif selon la revendication 1, dans lequel les dents (12') engrènent avec des reliefs (61") que comprend la surface d'entrainement (61'; 161).

3. Dispositif selon l'une des quelconque des revendications 1 à 2, dans lequel ledit mouvement de la lentille (1 ; 101) est un mouvement de rotation autour d'un axe de rotation (3 ; 103), le secteur de roue (11 ; 111) étant centré sur l'axe de rotation (3 ; 103) de la lentille.

4. Dispositif selon l'une des quelconque des revendications précédentes, dans lequel la lentille (1 ; 101) est formée en un matériau monobloc transparent ou translucide, ce matériau étant du polyméthacrylate de méthyle.

5. Dispositif selon l'une des quelconque des revendications précédentes, dans lequel le secteur de roue (11) comprend une portion de cylindre et des dents (12') agencées sur la tranche de la portion de cylindre, formant ainsi la surface entrainée (12), notamment une portion de cylindre d'axe parallèle ou confondu avec l'axe de rotation (3) de la lentille (1), notamment d'axe parallèle ou confondu avec l'axe de rotation de la lentille.

6. Dispositif selon la revendication 5, dans lequel la surface entrainée (12) porte une denture hélicoïdale.

7. Dispositif selon l'une des quelconque des revendications 5 à 6, dans lequel le moyen d'entrainement est une vis de réglage (60) comprenant une portion filetée (61) avec un filetage (61") formant la surface d'entrainement (61').

8. Dispositif selon la revendication 7, dans lequel la vis de réglage (60) s'étend selon un axe longitudinal (63) et comprend une portion porteuse (69), ladite portion porteuse étant située d'un côté de la portion filetée (61) selon l'axe longitudinal (63), ledit dispositif comprenant en outre :
- une paroi de coopération (68) avec la vis de réglage,
- un ou des moyens élastiques (90) agencés entre ladite portion porteuse et ladite paroi de coopération et aptes à être comprimés selon une direction transversale à l'axe longitudinal de la vis de réglage,
la lentille (1), la paroi de coopération et le ou les moyens élastiques étant agencés de manière à ce que le ou au moins l'un des moyens élastiques soit contraint de manière à exercer une force de rappel de la portion filetée vers la lentille et dans lequel le secteur de roue (11 ; 111) forme un bras, la force de rappel de la portion filetée vers la lentille étant alignée avec la direction selon laquelle s'étend ce bras.

9. Dispositif selon la revendication 7 ou 8, comprenant un boitier (50) à l'intérieur duquel sont logés la lentille (1) et la vis de réglage et dans lequel le boitier comprend :
- un logement avant (52) fermé à l'avant par une glace de fermeture, la lentille (1) étant montée à l'intérieur de ce logement avant,
- une cassette (55) à l'intérieur duquel est agencée la portion filetée (61),
- un manchon (85) reliant le logement avant et la cassette, le secteur de roue (11) formant un bras s'étendant selon sa longueur au travers du manchon jusque dans la cassette, où la surface entrainée (12) est en contact avec la surface d'entrainement (61').

10. Dispositif selon la revendication 9, dans lequel la cassette (55) a une paroi intérieure formée par une portion de cylindre d'un diamètre donné, le manchon (85) présentant selon une direction transversale une largeur interne inférieure à ce diamètre donné et supérieure à l'épaisseur (e) du secteur de roue (11).

11. Dispositif selon la revendication 9 ou 10, dans lequel le manchon (85) débouche dans la cassette (55) via une ouverture (84) délimitée par un chanfrein orienté vers l'intérieur du manchon.

12. Dispositif selon l'une des quelconque des revendications 1 à 4, dans lequel le secteur de roue (111) est un secteur de roue conique, notamment d'axe parallèle ou confondu avec l'axe de rotation (103) de la lentille (101), et dans lequel le moyen d'entrainement est une roue conique (160) d'axe (163) formant un angle avec l'axe (103) du secteur de roue (111) conique.

13. Dispositif selon la revendication 12, dans lequel le secteur de roue (111) forme un bras présentant une élasticité selon une direction parallèle à l'axe (163) de la roue conique (160), le bras et la roue conique étant agencés de manière à ce que le bras soit contraint de manière à exercer une force de rappel de la surface entrainée (112) vers la surface d'entrainement (161).

14. Dispositif selon l'une des quelconque des revendications précédentes, ledit dispositif comprenant également :
- un ensemble de plaquage (30) comprenant une armature (36) et une portion de contact (31) portée par l'armature, l'armature entourant au moins partiellement la lentille (1), ladite portion de contact étant en appui contre la lentille,
la lentille, le moyen d'entrainement (60 ; 160) et ledit élément de plaquage (30) étant agencés de manière à ce que la lentille soit au moins partiellement enserrée entre la vis de réglage et ladite portion de contact, et à ce que, selon une direction allant de la vis de réglage vers ladite portion de contact, dite direction de flexion (F), ladite portion de contact soit rigide et l'armature soit élastiquement déformable.

15. Dispositif selon la revendication 14, dans lequel la longueur du bras du secteur de roue (11 ; 111) est alignée avec ladite direction de flexion (F).

## Patentansprüche

1. Lichtvorrichtung für ein Fahrzeug, umfassend:
- eine Linse (1; 101), die dazu bestimmt ist, die Lichtstrahlen umzulenken, die von einer Lichtquelle (6) abgegeben werden, und einen Radsektor (11; 111) mit einer angetriebenen Fläche (12; 112) umfasst, wobei der Radsektor mit der gesamten Linse einstückig ausgebildet ist,
- ein Antriebsmittel (60; 160) mit einer Antriebsfläche (61'; 161), die so angeordnet ist, dass die Antriebsfläche mit der angetriebenen Fläche in Kontakt steht und die Bewegung der Antriebsfläche eine Bewegung der Linse bewirkt;
**dadurch gekennzeichnet, dass** der Radsektor ein Zahnradsektor (11; 111) ist, wobei die Reliefs der angetriebenen Fläche (12; 112) Zähne (12') sind und der Zahnradsektor (11; 111) einen Arm bildet, der sich seiner Länge nach zwischen einem ersten Ende, das mit der Linse (1; 101) verbunden ist, und einem zweiten, freien Ende erstreckt, wobei letzteres die angetriebene Fläche (12; 112) trägt.

2. Vorrichtung nach Anspruch 1, wobei die Zähne (12') mit Reliefs (61") ineinandergreifen, die die Antriebsfläche (61'; 161) umfasst.

3. Vorrichtung nach einem der Ansprüche 1 bis 2, wobei die Bewegung der Linse (1; 101) eine Drehbewegung um eine Drehachse (3; 103) ist, wobei der Radsektor (11; 111) auf der Drehachse (3; 103) der Linse zentriert ist.

4. Vorrichtung nach einem der vorhergehenden Ansprüche, wobei die Linse (1; 101) aus einem transparenten oder durchscheinenden, einstückigen Material gebildet ist, wobei dieses Material Polymethylmethacrylat ist.

5. Vorrichtung nach einem der vorhergehenden Ansprüche, wobei der Radsektor (11) einen Zylinderabschnitt und Zähne (12'), die auf dem Rand des Zylinderabschnitts angeordnet sind, umfasst, wodurch die angetriebene Fläche (12) gebildet wird, insbesondere einen Zylinderabschnitt mit einer Achse, die mit der Drehachse (3) der Linse (1) parallel verläuft oder zusammenfällt, insbesondere mit einer Achse, die mit der Drehachse der Linse parallel verläuft oder zusammenfällt.

6. Vorrichtung nach Anspruch 5, wobei die angetriebene Fläche (12) eine Schrägverzahnung trägt.

7. Vorrichtung nach einem der Ansprüche 5 bis 6, wobei das Antriebsmittel eine Einstellschraube (60) ist, die einen Gewindeabschnitt (61) mit einem Gewinde (61") umfasst, das die Antriebsfläche (61') bildet.

8. Vorrichtung nach Anspruch 7, wobei sich die Einstellschraube (60) gemäß einer Längsachse (63) erstreckt und einen Trägerabschnitt (69) umfasst, wobei sich der Trägerabschnitt auf einer Seite des Gewindeabschnitts (61) gemäß der Längsachse (63) befindet, wobei die Vorrichtung ferner Folgendes umfasst:
- eine Wand zur Zusammenwirkung (68) mit der Einstellschraube,
- ein oder mehrere elastische Mittel (90), die zwischen dem Trägerabschnitt und der Zusammenwirkungswand angeordnet und geeignet sind, in einer Richtung quer zur Längsachse der Einstellschraube zusammengedrückt zu werden,
wobei die Linse (1), die Zusammenwirkungswand und das oder die elastischen Mittel so angeordnet sind, dass das oder mindestens eins der elastischen Mittel so vorgespannt ist, dass es eine Kraft zum Rückstellen des Gewindeabschnitts zur Linse ausübt, und wobei der Radsektor (11; 111) einen Arm bildet, wobei die Kraft zum Rückstellen des Gewindeabschnitts zur Linse mit der Richtung ausgerichtet ist, in der sich dieser Arm erstreckt.

9. Vorrichtung nach Anspruch 7 oder 8, umfassend ein Gehäuse (50), innerhalb welchem die Linse (1) und die Einstellschraube untergebracht sind, und wobei das Gehäuse Folgendes umfasst:
- eine vordere Aufnahme (52), die vorne von einer Verschlussscheibe verschlossen ist, wobei die Linse (1) innerhalb dieser vorderen Aufnahme angebracht ist,
- eine Kassette (55), innerhalb welcher der Gewindeabschnitt (61) angeordnet ist,
- eine Hülse (85), die die vordere Aufnahme und die Kassette verbindet, wobei der Radsektor (11) einen Arm bildet, der sich seiner Länge nach durch die Hülse bis in die Kassette erstreckt, wo die angetriebene Fläche (12) mit der Antriebsfläche (61') in Kontakt steht.

10. Vorrichtung nach Anspruch 9, wobei die Kassette (55) eine Innenwand aufweist, die von einem Zylinderabschnitt eines bestimmten Durchmessers gebildet ist, wobei die Hülse (85) in einer Querrichtung eine Innenbreite aufweist, die kleiner als dieser bestimmte Durchmesser und größer als die Dicke (e) des Radsektors (11) ist.

11. Vorrichtung nach Anspruch 9 oder 10, wobei die Hülse (85) über eine Öffnung (84) in der Kassette (55) mündet, die von einer Abschrägung begrenzt ist, die dem Inneren der Hülse zugewandt ist.

12. Vorrichtung nach einem der Ansprüche 1 bis 4, wobei der Radsektor (111) ein Kegelradsektor ist, insbesondere mit einer Achse, die mit der Drehachse (103) der Linse (101) parallel verläuft oder zusammenfällt, und wobei das Antriebsmittel ein Kegelrad (160) mit einer Achse (163) ist, die einen Winkel mit der Achse (103) des Kegelradsektors (111) bildet.

13. Vorrichtung nach Anspruch 12, wobei der Radsektor (111) einen Arm bildet, der eine Elastizität in einer Richtung parallel zur Achse (163) des Kegelrads (160) aufweist, wobei der Arm und das Kegelrad so angeordnet sind, dass der Arm so vorgespannt ist, dass er eine Kraft zum Rückstellen der angetriebenen Fläche (112) zur Antriebsfläche (161) ausübt.

14. Vorrichtung nach einem der vorhergehenden Ansprüche, wobei die Vorrichtung ebenfalls Folgendes umfasst:
- eine Anpressanordnung (30), die eine Armatur (36) und einen Kontaktabschnitt (31), der von der Armatur getragen wird, umfasst, wobei die Armatur die Linse (1) wenigstens teilweise umgibt, wobei der Kontaktabschnitt an der Linse anliegt,
wobei die Linse, das Antriebsmittel (60; 160) und das Anpresselement (30) so angeordnet sind, dass die Linse wenigstens teilweise zwischen der Einstellschraube und dem Kontaktabschnitt eingespannt ist, und dass in einer Richtung von der Einstellschraube zum Kontaktabschnitt, die als Biegerichtung (F) bezeichnet wird, der Kontaktabschnitt starr und die Armatur elastisch verformbar ist.

15. Vorrichtung nach Anspruch 14, wobei die Länge des Arms des Radsektors (11; 111) mit der Biegerichtung (F) ausgerichtet ist.

## Claims

1. Vehicle lighting device comprising:
- a lens (1; 101) intended to deflect the light rays emitted by a light source (6) and comprising a wheel sector (11; 111) with a driven surface (12; 112), the wheel sector being made in one piece with the lens as a whole,
- a driving means (60; 160) with a driving surface (61'; 161) such that the driving surface is in contact with the driven surface and movement of the driving surface drives movement of the lens;
**characterized in that** the wheel sector is a toothed wheel sector (11; 111), the raised patterns of the driven surface (12; 112) being teeth (12') and the wheel sector (11; 111) forms an arm extending lengthwise between a first end connected to the lens (1; 101) and a free second end, the latter carrying the driven surface (61'; 161).

2. Device according to Claim 1, in which the teeth (12') mesh with raised patterns (61") of the driving surface (61'; 161) .

3. Device according to any one of Claims 1 to 2, in which said movement of the lens (1; 101) is a movement of rotation about a rotation axis (3; 103), the wheel sector (11; 111) being centered on the rotation axis (3; 103) of the lens.

4. Device according to any one of the preceding claims, in which the lens (1; 101) is formed in one piece from a transparent or translucent material, this material being polymethyl methacrylate.

5. Device according to any one of the preceding claims, in which the wheel sector (11) comprises a cylinder portion and teeth (12') on the edge surface of the cylinder portion, thereby forming the driven surface (12), notably a cylinder portion having an axis parallel to or coinciding with the rotation axis (3) of the lens (1), notably an axis parallel to or coinciding with the rotation axis of the lens.

6. Device according to Claim 5, in which the driven surface (12) carries helicoidal teeth.

7. Device according to either one of Claims 5 or 6, in which the driving means is an adjuster screw (60) comprising a threaded portion (61) with a thread (61") forming the driving surface (61').

8. Device according to Claim 7, in which the adjuster screw (60) extends along a longitudinal axis (63) and comprises a carrier portion (69), said carrier portion being situated on one side of the threaded portion (61) along the longitudinal axis (63), said device further comprising:
- a wall (68) cooperating with the adjuster screw,
- one or more elastic means (90) arranged between said carrier portion and said cooperating wall and adapted to be compressed in a direction transverse to the longitudinal axis of the adjuster screw,
the lens (1), the cooperating wall and the elastic means being such that the elastic means or at least one of the elastic means is loaded to exert a return force to urge the threaded portion toward the lens and in which the wheel sector (11; 111) forms an arm, the force returning the threaded portion toward the lens being aligned with the direction in which this arm extends.

9. Device according to Claim 7 or 8, comprising a casing (50) inside which the lens (1) and the adjuster screw are housed, and in which the casing comprises:
- a front housing (52) closed at the front by a closing outer lens, the lens (1) being mounted inside this front housing,
- a cassette (55) with the threaded portion (61) inside it,
- a sleeve (85) connecting the front housing and the cassette, the wheel sector (11) forming an arm extending lengthwise through the sleeve into the cassette, where the driven surface (12) is in contact with the driving surface (61').

10. Device according to Claim 9, in which the cassette (55) has an interior wall formed by a cylinder portion of a given diameter, the sleeve (85) having an inside width in a transverse direction less than this given diameter and greater than the thickness (e) of the wheel sector (11).

11. Device according to Claim 9 or 10, in which the sleeve (85) opens into the cassette (55) via an opening (84) delimited by a chamfer oriented toward the interior of the sleeve.

12. Device according to any one of Claims 1 to 4, in which the wheel sector (111) is a conical wheel sector, notably having an axis parallel to or coinciding with the rotation axis (103) of the lens (101), and in which the driving means is a conical wheel (160) having an axis (163) at an angle to the axis (103) of the conical wheel sector (111).

13. Device according to Claim 12, in which the wheel sector (111) forms an arm having an elasticity in a direction parallel to the axis (163) of the conical wheel (160), the arm and the conical wheel being such that the arm is loaded so as to exert a return force to urge the driven surface (112) toward the driving surface (161).

14. Device according to any one of the preceding claims, said device also comprising:
- a pressing assembly (30) comprising an armature (36) and a contact portion (31) carried by the armature, the armature surrounding the lens (1) at least partly, said contact portion bearing against the lens,
the lens, the driving means (60; 160) and said pressing member (30) being such that the lens is at least partially clamped between the adjuster screw and said contact portion and in a direction going from the adjuster screw towards said contact portion, termed the flexing direction (F), said contact portion is rigid and the armature is elastically deformable.

15. Device according to Claim 14, in which the length of the arm of the wheel sector (11; 111) is being aligned with said flexing direction (F).
